# EUROPÄISCHE PATENTSCHRIFT

(11) **EP 3 350 907 B1**
(45) Veröffentlichungstag und Bekanntmachung des Hinweises auf die Patenterteilung: **03.07.2024**
(21) Anmeldenummer: 16763492.2
(22) Anmeldetag: 05.09.2016
(51) Int. Cl.: H02K 15/04, H02K 15/06

(54) **VERFAHREN UND EINTEILIGE WERKZEUGANORDNUNG ZUM HERSTELLEN EINES STATORS FÜR EINE ELEKTRISCHE MASCHINE**
METHOD AND ONE-PIECE TOOL ASSEMBLY FOR PRODUCING A STATOR FOR AN ELECTRICAL MACHINE
PROCÉDÉ ET ENSEMBLE OUTIL EN UNE PARTIE POUR FABRIQUER UN STATOR DE MACHINE ÉLECTRIQUE

(30) Priorität: 18.09.2015 DE 102015217936
(43) Veröffentlichungstag der Anmeldung: 25.07.2018
(73) Patentinhaber: Vitesco Technologies GmbH, 93055 Regensburg (DE)
(72) Erfinder: GOHS, Axel, 12459 Berlin (DE); RADTKE, Christoph, 12249 Berlin (DE)
(74) Vertreter: Vitesco Technologies
(86) Internationale Anmeldenummer: PCT/EP2016/070812
(87) Internationale Veröffentlichungsnummer: WO 2017/045946

(56) Entgegenhaltungen:
- JP-A- 2013 172 575
- US-A- 2 476 744
- US-A1- 2014 237 811

## Beschreibung

Die Erfindung betrifft ein Verfahren zum Herstellen eines Stators einer elektrischen Maschine sowie eine Werkzeuganordnung zum Durchführen des Verfahrens. Der Stator soll eine Zweischichtwicklung aufweisen, welche pro Nut eines Blechpakets jeweils ein elektrisches Leiterelement für eine radial außenliegende Schicht und ein elektrisches Leiterelement für eine radial innenliegende Schicht der Zweischichtwicklung aufweist. Bei jedem Leiterelement kann es sich beispielsweise jeweils um einen isolierten Draht handeln.

Ein Stator einer elektrischen Maschine weist zum Erzeugen eines magnetischen Drehfelds ein Blechpaket sowie elektrische Spulen auf. Das Blechpaket besteht aus elektrisch gegeneinander isolierten weichmagnetischen Blechschichten. In dem Blechpaket sind Nuten angeordnet, in denen wiederum jeweils elektrische Leiterelemente der Spulen angeordnet sind.

Die Gesamtheit der Spulen wird als Wicklung bezeichnet. Bei der genannten Zweischichtwicklung sind pro Nut jeweils zwei Leiterelemente angeordnet. Die in den Nuten radial außenliegenden Leiterelemente bilden einen äußeren Ring oder eine äußere Schicht der Zweischichtwicklung. Die radial innenliegenden Leiterelemente bilden einen inneren Ring oder eine radial innenliegende Schicht. Die aus der Stirnseite des Blechpakets herausragenden Leiterteile der Leiterelemente einer Schicht werden mit den Leiterelementen der aus der Stirnseite herausragenden Leiterteile der anderen Schicht in Umfangsrichtung gekreuzt oder verschränkt. Durch anschließendes elektrisches Verbinden von Leiterenden einer Schicht mit einem korrespondierenden Leiterende der anderen Schicht können gezielt die einzelnen Leiterelemente miteinander elektrisch verschaltet und so die elektrischen Spulen gebildet werden.

Um auch elektrische Anschlussenden für die elektrischen Spulen sowie mehrere Schleifen oder Windungen pro Spule zu erhalten, ist es nötig, für besondere, selektive Leiterenden die Verschränkung unregelmäßig zu wählen, damit sich hierdurch ein Verschaltungsbereich ergibt, der zum einen freistehende Spulenanschlüsse und zum anderen einen Windungsübergang von einer Windung der Spule zur nächsten Windung aufweist. Aufgrund solcher Verschaltungsbereiche weist das Muster der Verschränkung entlang des Umfangs eine Unregelmäßigkeit auf, die bei einer maschinellen automatisierten Herstellung eines Stators das Problem mit sich bringt, dass die Leiterenden aufwendig relativ zueinander positioniert werden müssen. Dies ist insbesondere deshalb aufwendig, da sämtliche aus der Stirnseite des Blechpakets herausragenden Leiterteile für die Verschränkung noch einmal geknickt werden.

Bekannte Lösungen sehen vor, die Leiterelemente vorzubiegen, bevor sie in den Nuten angeordnet werden. Hierdurch sind aber Toleranzmaße nötig, durch welche sich eine ungünstige oder suboptimale axiale Wickelkopfhöhe des Wickelkopfes ergibt.

Die JP 2013 172 575 A beschreibt ein Verfahren zum Herstellen eines Stators, wobei die Leiterenden durch zwei voneinander verschiedene Werkzeuge in Umfangsrichtung verdreht werden.

Die US 2014 0 237 811 A1 zeigt ein Werkzeug zum Verdrehen der Leiterenden eines Stators, wobei das Werkzeug axial verschiebbare Taschen aufweist.

Die US 2 476 744 A beschreibt eine Vorrichtung zum Vertwisten einer zweilagig angeordneten Statorwicklung, die als Hairpins ausgebildet sind.

Der Erfindung liegt die Aufgabe zugrunde, einen Stator mit Zweischichtwicklung und kompaktem Wickelkopf bereitzustellen, der preiswert herstellbar ist.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Verfahren zum Herstellen eines Stators bereitgestellt. In an sich bekannter Weise wird in Nuten eines Blechpakets für eine radial außenliegende Schicht und eine radial innenliegenden Schicht einer Zweischichtwicklung jeweils ein elektrisches Leiterelement pro Schicht angeordnet. Bei jedem Leiterelement kann es sich beispielsweise um einen isolierten Draht oder eine isolierte Kupferstange handeln. Es handelt sich dann also um eine Stabwicklung. Es können auch jeweils zwei Leiterelemente durch einen Draht in U-Form bereitgestellt sein, was auch als Haarnadeltechnik bezeichnet wird.

Jede der Schichten, das heißt jeder Ring aus Leiterelementen, kann dann getrennt prozessiert werden. Bei einer oder beiden der Schichten wird gemäß dem Verfahren an einer Stirnseite des Blechpakets jeweils ein Werkzeug mit Aufnahmebereichen bereitgestellt, die in einem Ring angeordnet sind. Eine relative Anordnung der Aufnahmebereiche des Werkzeugs entlang einer Umfangsrichtung des Ringes entspricht einer relativen Endstellung, die für Leiterenden der Leiterelemente der Schicht zur Verschaltung vorgesehen ist. Durch die Verschaltung wird dabei ein Teil der Leiterenden mit korrespondierenden Leiterenden der Leiterelemente der anderen Schicht verschaltet. Mit anderen Worten entspricht die relative Anordnung oder die relative Lage der Aufnahmebereiche in dem Werkzeug der relativen Anordnung oder relativen Lage der Leiterenden im fertigen Zustand des Stators.

In einem Positionierprozess wird das Werkzeug in eine erste Drehstellung bewegt und jedes Leiterende einer ersten Gruppe der Leiterelemente der Schicht jeweils in einen der Aufnahmebereiche gesteckt. Dann wird das Werkzeug in zumindest eine weitere Drehstellung gedreht und jeweils jedes Leiterende einer weiteren Gruppe der Leiterelemente der Schicht jeweils in einen der Aufnahmebereiche gesteckt. Insgesamt sind so viele Gruppen vorgesehen, bis die Leiterenden aller Leiterelemente die relative Endstellung zueinander aufweisen, indem jedes Leiterende in einem Aufnahmebereich steckt. Durch das Drehen des Werkzeugs zwischen dem Einfügen weiterer Leiterenden in Aufnahmebereiche werden die bereits in den Aufnahmebereichen steckenden Leiterenden jeweils um einen vorbestimmten Drehwinkel um die Achse des Stators gedreht. Hierdurch können also für unterschiedliche Gruppen von Leiterelementen jeweils unterschiedliche Drehwinkel oder Positionen eingestellt werden. Hiermit endet dann der Positionierprozess.

Die Erfindung weist den Vorteil auf, dass nach dem Positionierprozess die Leiterenden in dem Werkzeug stecken und bereits ihre relative Endstellung zueinander aufweisen. Anschließend kann deshalb der Wickelkopf geformt werden, indem die aus dem Blechpaket herausstehenden Pins oder Leiterteile der Leiterelemente gebogen oder verschränkt werden, ohne dass sich dabei die relative Endstellung der Leiterenden verändert. Die Leiterenden werden durch das Werkzeug in ihrer relativen Endstellung zueinander gehalten. Somit lässt sich ein kompakter Wickelkopf formen, ohne dass danach die Leiterenden neu positioniert werden müssten. Erfindungsgemäß ist das genannte Werkzeug für jede Schicht jeweils einteilig ausgestaltet.

Zu der Erfindung gehören auch Weiterbildungen, durch deren Merkmale sich zusätzliche Vorteile ergeben.

Gemäß einer Weiterbildung sind insgesamt drei Gruppen vorgesehen, von denen für alle vorgesehenen elektrischen Spulen des Stators eine der Gruppen die Leiterenden eines Normalbereichs, eine der Gruppen die Leiterenden zum Verschalten von Windungen der einzelnen Spulen und eine der Gruppen die Leiterenden für Spulenanschlüsse der Spulen umfasst. Hierdurch ist somit eine jeweilige Drehstellung für die entscheidenden Typen von Leiterenden vorgesehen. Welche Gruppe hierbei die erste Gruppe bildet, kann je nach Ausgestaltung des Werkzeugs vom Fachmann entschieden werden. Selbiges gilt für die zweite Gruppe. Die Leiterenden zum Verschalten und die Leiterenden für die Spulenanschlüsse bilden zusammen einen Verschaltungsbereich.

Bei einer Weiterbildung werden die Leiterelemente zum Anordnen in die Nuten und zum Einstecken der Leiterenden in die Aufnahmebereiche jeweils als gerade Stäbe bereitgestellt, die jeweils durch eine der Nuten gesteckt werden. Mit anderen Worten sind alle Leiterelemente gleichförmig ausgestaltet, nämlich als gerade Stäbe. Dies macht das Herstellen des Stators besonders effizient.

Eine Weiterbildung hierzu sieht vor, dass die Leiterelemente in die Nuten geschossen werden. Mit anderen Worten wird jedem Leiterelement derart viel Schwung verliehen, dass es sich selbsttätig entlang der Nut bewegt und das Leiterende in den Aufnahmebereich geleitet. Das Einschießen kann automatisiert werden und ermöglicht hierdurch das Anordnen eines Leiterelements in weniger als einer Sekunde.

Gemäß einer Weiterbildung werden nach dem Positionierprozess die Leiterelemente einer der Schichten oder beider Schichten jeweils in einem Twistprozess geknickt oder gebogen. Der Twistprozess umfasst pro Schicht ein relatives Drehen des Werkzeugs bezüglich des Blechpakets und gleichzeitiges Zusammenführen des Werkzeugs und des Blechpakets, so dass die aus dem Blechpaket herausragenden Leiterstücke oder Leiterteile der Leiterelemente der Schicht entlang der Umfangsrichtung geknickt oder gebogen werden. Die Leiterteile werden hierbei in der Weise geknickt, dass alle Leiterteile einen Schrägungsbereich aufweisen, die bezüglich einer Stirnfläche des Blechpakets alle denselben Schrägungswinkel aufweisen. Hierdurch ergibt sich ein besonders kompakter Wickelkopf, dessen axiale Abmessung minimiert werden kann.

Der Twistprozess wird bevorzugt für beide Schichten durchgeführt, wobei für beide Schichten jeweils ein jeweiliges Werkzeug bereitgestellt wird und für die Schichten der Twistprozess in entgegengesetzte Umfangsrichtungen durchgeführt wird, sodass die herausstehenden Leiterteile einer der Schichten und die herausstehenden Leiterteile der anderen Schicht miteinander verschränkt werden. Hierdurch ergibt sich der Vorteil, dass die elektrisch zu verbindenden Leiterenden einer Schicht radial fluchtend mit den korrespondierenden Leiterenden der anderen Schicht angeordnet werden können. So können dann die jeweils radial fluchtend angeordneten Leiterenden ohne weitere Umformung verschweißt oder verlötet werden.

Zu der Erfindung gehört auch eine Werkzeuganordnung zum Herstellen eines Stators für eine elektrische Maschine. Mittels der Werkzeuganordnung lässt sich eine Ausführungsform des erfindungsgemäßen Verfahrens durchführen. Hierzu weist die Werkzeuganordnung ein jeweiliges Werkzeug für zumindest eine Schicht einer Zweischichtwicklung des Stators auf, wobei jedes Werkzeug jeweilige Aufnahmebereiche zum Einstecken eines Leiterendes eines Leiterelements aufweist und wobei eine relative Anordnung der Aufnahmebereiche entlang einer Umfangsrichtung des Ringes der beschriebenen relativen Endstellung für die Leiterenden entspricht. Die Werkzeuganordnung weist des Weiteren eine Haltereinrichtung zum Halten eines Blechpakets derart auf, dass eine Stirnseite des Blechpakets dem zumindest einen Werkzeug zugewandt ist. Des Weiteren ist eine Bewegungseinrichtung bereitgestellt, die dazu ausgelegt ist, bei in der Halteeinrichtung angeordneten Blechpaket in einem Positionierprozess pro Schicht jeweils Leiterenden von Leiterelementen für die Schicht in jeweils einen Aufnahmebereich anzuordnen und hierzu das Werkzeug in eine erste Drehstellung zu bewegen und jedes Leiterende einer ersten Gruppe der Leiterelemente der Schicht jeweils in einen der Aufnahmebereiche zu stecken, dann das Werkzeug in zumindest eine weitere Drehstellung zu drehen und jeweils jedes Leiterende einer weiteren Gruppe der Leiterelemente der Schicht jeweils in einen der Aufnahmebereiche zu stecken, bis die Leiterenden aller Leiterelemente der Schicht in jeweils einen Aufnahmebereich gesteckt sind und hierdurch die relative Endstellung zueinander aufweisen. Bevorzugt ist die Bewegungseinrichtung dazu ausgelegt, drei Gruppen von Leiterelementen in der beschriebenen Weise im Positionierprozess in das Werkzeug einzustecken.

Bei einer Weiterbildung der Werkzeuganordnung ist die Bewegungseinrichtung dazu ausgelegt, nach dem Positionierprozess in einem Twistprozess das Werkzeug jeder Schicht einerseits und das Blechpaket andererseits zusammenzuführen und währenddessen das Werkzeug relativ zum Blechpaket zu drehen, sodass die Leiterelemente gleichmäßig bezüglich der Stirnseite des Blechpakets um denselben Schrägungswinkel geknickt oder gebogen werden.

Des Weiteren ist ein Stator für eine elektrische Maschine offenbart, wobei der Stator durch eine Ausführungsform des erfindungsgemäßen Verfahrens und/oder mittels einer Ausführungsform der erfindungsgemäßen Werkzeuganordnung hergestellt ist. Hierdurch weist der Stator den markanten kompakten Wickelkopf auf, bei welchem die aus der Stirnseite herausragenden Leiterteile der Leiterelemente alle denselben Schrägungswinkel aufweisen und dennoch einige der Leiterenden eine Endstellung für eine Verschaltung von Windungen der Spulen und einige eine Endstellung für einen Spulenanschluss aufweisen.

Bei dem Stator kann vorgesehen sein, dass radial innenliegende Nutöffnungen der Nuten in Umfangsrichtung eine Spaltbreite oder Nutbreite aufweisen, die kleiner ist als eine Abmessung der in den Nuten jeweils angeordneten Leiterelemente. Die Abmessung ist dabei in dieselbe Umfangsrichtung gemessen wie die Nutbreite. Mit anderen Worten lassen sich die Leiterelemente nicht entlang der radialen Richtung aus der Nut einlegen, sondern nur über eine der Stirnseiten hineinstecken. Eine solche geringe Nutbreite mit gleichzeitig verschränkten Leiterelementen im Wickelkopf ist nur mittels des erfindungsgemäßen Verfahrens und/oder der erfindungsgemäßen Werkzeuganordnung möglich.

Im Folgenden ist ein Ausführungsbeispiel der Erfindung beschrieben. Hierzu zeigt:
- Fig. 1: eine schematische Darstellung einer perspektivischen Ansicht einer Ausführungsform des erfindungsgemäßen Stators;
- Fig. 2: eine schematische Darstellung einer einzelnen elektrischen Spule des Stators von Fig. 1;
- Fig. 3: eine schematische Darstellung einer perspektivischen Ansicht eines Verschaltungsbereichs von Windungen der Spule von Fig. 2 sowie elektrischen Spulenanschlüssen der Spule;
- Fig. 4: eine schematische Darstellung des Verschaltungsbereichs von Fig. 3 in einer Draufsicht;
- Fig. 5: eine schematische Darstellung eines Werkzeugs zum Herstellen eines Wickelkopfes des Stators;
- Fig. 6: eine schematische Darstellung einer Draufsicht auf eine Werkzeuganordnung mit zwei Werkzeugen, von denen eines in Fig. 5 dargestellt ist;
- Fig. 7: eine schematische Darstellung eines Längsschnitts der Werkzeuganordnung nach dem Einführen einer ersten Gruppe von Leiterelementen während eines Positionierprozesses; und
- Fig. 8: eine schematische Darstellung des Längsschnitts von Fig. 7 nach dem Einführen einer zweiten Gruppe von Leiterelementen während des Positionierprozesses.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

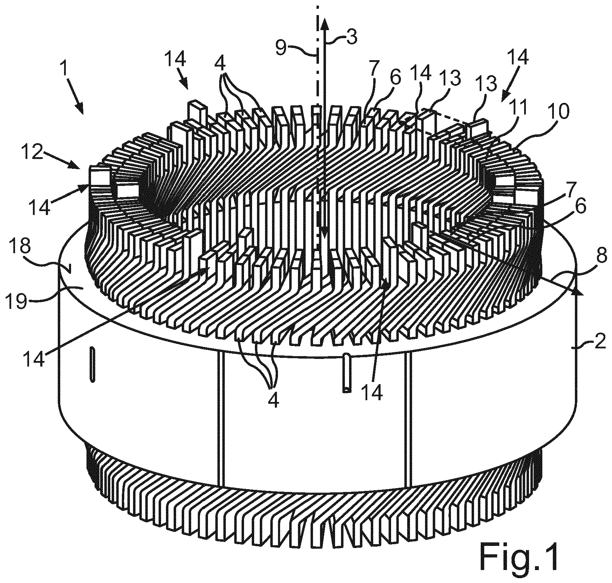

Fig. 1 zeigt einen Stator 1 für eine elektrische Maschine. Der Stator 1 kann beispielsweise für einen Starter-Generator eines Kraftfahrzeugs vorgesehen sein. Der Stator 1 weist ein Blechpaket 2 auf, das in an sich bekannter Weise aus weichmagnetischen Blechschichten (Koerzitivfeldstärke kleiner als 1000 A/m) gebildet sein kann, die elektrisch gegeneinander isoliert sind und entlang einer axialen Richtung 3 gestapelt oder geschichtet sind.

In Nuten 4 des Blechpakets 3 sind jeweils durch eine axiale Nutöffnung 5 zwei Leiterelemente 6, 7 eingesteckt worden. Der Übersichtlichkeit halber sind von den genannten Elementen jeweils nur einige mit einem Bezugszeichen versehen. Die Leiterelemente 6, 7 jeder Nut 4 sind in einer radialen Richtung 8 fluchtend hintereinander angeordnet. Die radiale Richtung 8 ist jeweils von einer Achse 9, durch welche die axiale Richtung 3 festgelegt ist, senkrecht nach außen gerichtet. Die Achse 9 entspricht der bestimmungsgemäßen Rotationsachse eines Rotors, der in dem Stator angeordnet werden kann.

Durch die unterschiedlichen radialen Abstände der Leiterelemente 6, 7 entstehen zwei Ringe oder Schichten 10, 11, wobei die radial außenliegenden Leiterelemente 6 die Schicht 10 und die radial innenliegenden Leiterelemente 7 die Schicht 11 darstellen. Die Schichten 10, 11 sind Bestandteil einer Zweischichtwicklung 12 des Stators 1. Die Zweischichtwicklung 12 umfasst in dem gezeigten Beispiel sechs elektrische Spulen, von denen sich jede durch Verschalten einer jeweiligen Teilmenge der Leiterelemente 6, 7 ergibt. Jeweils ein Leiterelement der äußeren Schicht 10 und ein Leiterelement der inneren Schicht 11 bildet einen Phasenanschluss oder Spulenanschluss 13 einer der Spulen. Die Spulenanschlüsse 13 einer Spule sind jeweils in einem Verschaltungsbereich 14 angeordnet.

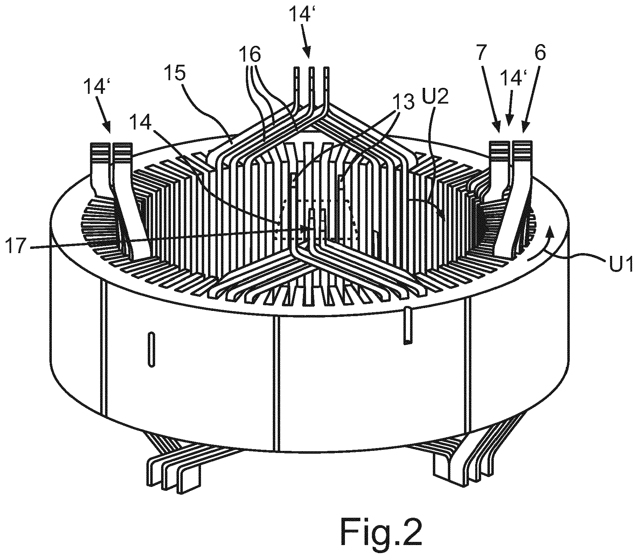

Fig. 2 zeigt zur Veranschaulichung eine einzelne elektrische Spule 15. Die Darstellung in Fig. 2 entspricht der Darstellung in Fig. 1, wobei all diejenigen Leiterelemente 6, 7 ausgeblendet sind, die zu den übrigen elektrischen Spulen gehören. Die in Fig. 2 dargestellte Spule 15 weist insgesamt drei Schleifen oder Windung 16 auf, die innerhalb des Verschaltungsbereichs 14 durch eine Windungsverschaltung 17 elektrisch miteinander verschaltet sind.

Zum Bilden der Windungen 16 der Spule 15 sind die Leiterelemente 6 der äußeren Schicht 11 entlang einer Umfangsrichtung U1 geschrägt oder geknickt worden, während die Leiterelemente 7 der inneren Schicht 11 in eine entgegengesetzte Umfangsrichtung U2 geschrägt oder geknickt worden sind. Hierdurch sind die Leiterelemente 6, 7 der beiden Schichten 10, 11 miteinander verschränkt.

Für das Gestalten der Spulenanschlüsse 13 und der Windungsverschaltung 17 müssen die Leiterelemente 6, 7 im Verschaltungsbereich 14 in spezieller Weise selektiv geformt sein. Die Verschaltungen der Leiterelemente 6, 7, außerhalb des Verschaltungsbereichs 14 stellen zusammen einen Normalbereich 14' dar, in welchem keine selektive Formung nötig ist.

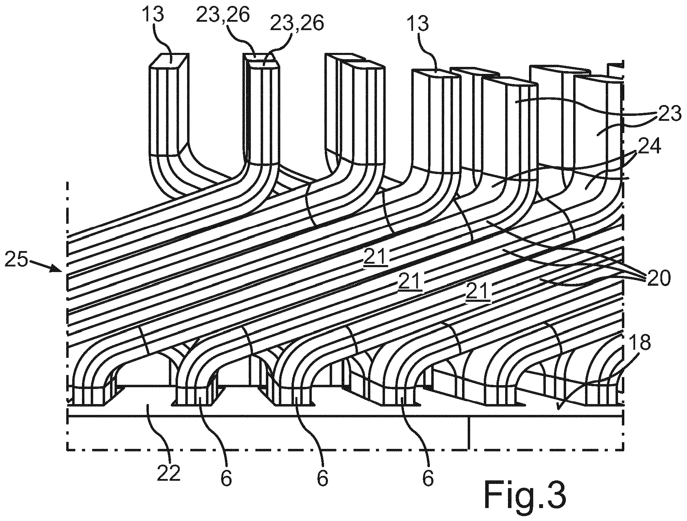

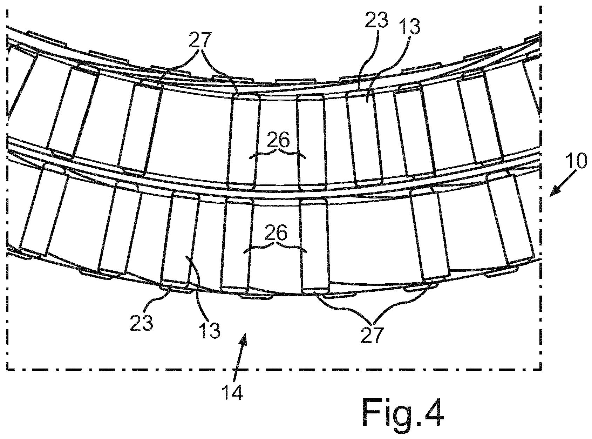

Der Verschaltungsbereich 14 ist in Fig. 3 und Fig. 4 noch einmal vergrößert dargestellt.

In Fig. 3 ist dargestellt, wie zum Bilden der Spule 15 und der übrigen Spulen von den elektrischen Leiterelementen 6, 7 jeweils die an einer Stirnseite 18 an einem axialen Ende 19 des Blechpakets 2 herausstehenden Pin-Enden oder Leiterteile 20 geschrägt oder geknickt worden sind, sodass ein Schrägungsbereich 21 einen Schrägungswinkel 22 bezüglich der Stirnfläche 18 aufweist.

Die Leiterteile 20 weisen des Weiteren Leiterenden 23 auf, die parallel zur Achse 9 ausgerichtet sind. Die Leiterteile 20 weisen hierzu eine Kröpfung 24 auf.

Die Schrägungswinkel 22 aller Schrägungsbereiche 21 der Leiterteile 20 sind gleich. Hierdurch liegen die Leiterteile 20 besonders dicht aufeinander. Die Leiterteile 20 sind Bestandteil eines Wickelkopfes 25 an der Stirnseite 18 des Blechpakets 2.

Im Verschaltungsbereich 14 sind paarweise jeweils ein Leiterende 23 der äußeren Schicht 10 und ein Leiterende 23 der inneren Schicht 11 axial fluchtend angeordnet und elektrisch miteinander verschaltet. Die elektrische Verschaltung kann beispielsweise durch Verschweißen oder Verlöten der Leiterenden 23 erfolgt sein. Über die Leiterenden 23 im Verschaltungsbereich 14 sind die Windungen 16 miteinander verschaltet. Diese Leiterenden 23 werden deshalb im Folgenden als Verschaltungsenden 26 bezeichnet. Die Spulenanschlüsse 13 sind jeweils durch ein Leiterende 23 des Verschaltungsbereichs 14 gebildet, das zwischen zwei benachbarten Leiterenden 27 der jeweils anderen Schicht 10, 11 angeordnet ist.

Außerhalb des Verschaltungsbereichs 14 im Normalbereich 14' sind die Leiterenden 23 in gleichmäßigen Winkelabständen zueinander angeordnet. In den Verschaltungsbereichen 14 ist es dagegen notwendig, wie in Fig. 4 gezeigt, die Winkelabstände der Leiterenden 23 zu variieren, um zum einen die Spulenanschlüsse 13 und zum anderen die Verschaltungsenden 26 zu bilden.

Um den Wickelkopf 25 bei dem Stator 1 auszugestalten, sind die Leiterelemente 6, 7 derart verformt worden, dass sich die Schrägungsbereiche 21 und die Kröpfung 24 ergeben und die Leiterenden 23 in den beschriebenen Relativpositionen zueinander angeordnet sind, sodass die Leiterenden 23 im Normalbereich 14' regelmäßige oder gleichmäßige Winkelabstände zueinander aufweisen und im Verschaltungsbereich 14 die Leiterenden 23 zu den Spulenanschlüssen 13 und den Verschaltungsenden 26 geformt sind.

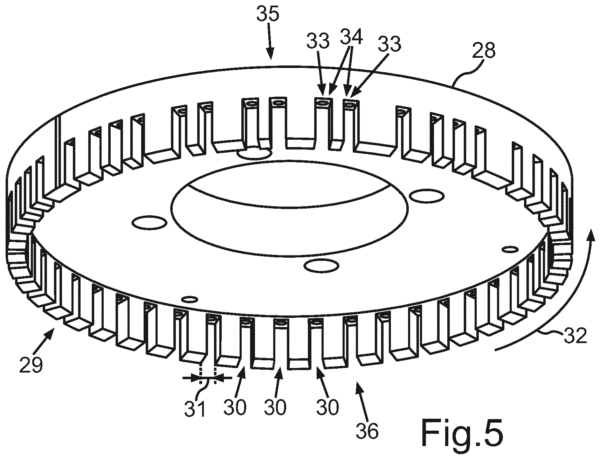

Fig. 5 zeigt hierzu ein Werkzeug 28 zum Bearbeiten oder Prozessieren einer der Schichten 10, 11. Das Werkzeug 28 kann beispielsweise als eine Kreisscheibe ausgestaltet sein, an welcher entlang eines Umfangs ein Ring 29 mit Aufnahmebereichen 30 ausgestaltet ist. Der Übersichtlichkeit halber sind in Fig. 5 nur einige Aufnahmebereiche 30 mit einem Bezugszeichen versehen. Das Werkzeug 28 kann als Kammrad ausgestaltet sein, wobei der Kamm durch die Aussparungen der Aufnahmebereiche 30 gebildet ist. Jeder Aufnahmebereich 30 kann eine Abmessung 31 in Umfangsrichtung aufweisen, welche einem Durchmesser eines einzelnen Leiterelements 6, 7 entspricht. Hierdurch ergibt sich ein fester Sitz jedes Leiterendes 23 nach dem Einstecken in einen Aufnahmebereich 30. Entlang eines Umfangs 32 ist eine relative Lage oder relative Anordnung der Aufnahmebereiche 30 derart, dass sie der relativen Anordnung der Leiterelemente 30 im Fertigzustand des Stators 1 entspricht, wie er in Fig. 1 dargestellt ist.

An einem jeweiligen Boden 33 jedes Aufnahmebereichs 30 kann jeweils eine Durchgangsöffnung 34 vorgesehen sein, durch welche mittels eines Pins oder Stifts von einer Rückseite 35 her eine Auswurfkraft auf die Leiterenden 23 nach Beenden eines Twistprozesses ausgeübt werden kann.

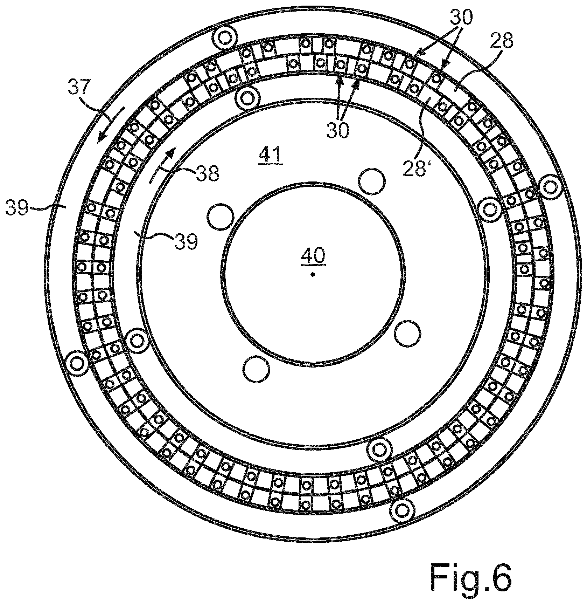

Fig. 6 zeigt eine Draufsicht auf das Werkzeug 28 aus einer Einsteckrichtung 36, die in Fig. 5 veranschaulicht ist. Die Einsteckrichtung 36 entspricht der Bewegungsrichtung, entlang welcher die Leiterelemente 6, 7 mit ihren Leiterenden 23 in die Aufnahmebereiche 30 gesteckt werden. In Fig. 6 ist zusätzlich zum Werkzeug 28 ein weiteres Werkzeug 28` dargestellt, welches zum Prozessieren der anderen Schicht 11 vorgesehen ist. Die Werkzeuge 28, 28` sind relativ zueinander drehbar angeordnet, sodass mit jeweils eingesteckten Leiterenden der Leiterelemente 6, 7 durch entgegengesetzte Drehrichtungen 37, 38 um die Achse 9 die Leiterteile 20 der beiden Schichten 6, 7 miteinander verschränkt werden können. Für eine axiale Stabilisierung der eingesteckten Leiterenden 23 ist eine Fassung 39 vorgesehen. Zur Gewichtsreduktion ist das Werkzeug im nicht benötigten Mittenbereich mit einer Aussparung 40 ausgestaltet. Eine Momentenübertragung von einer Bewegungseinrichtung kann über einen Flansch 41 erfolgen.

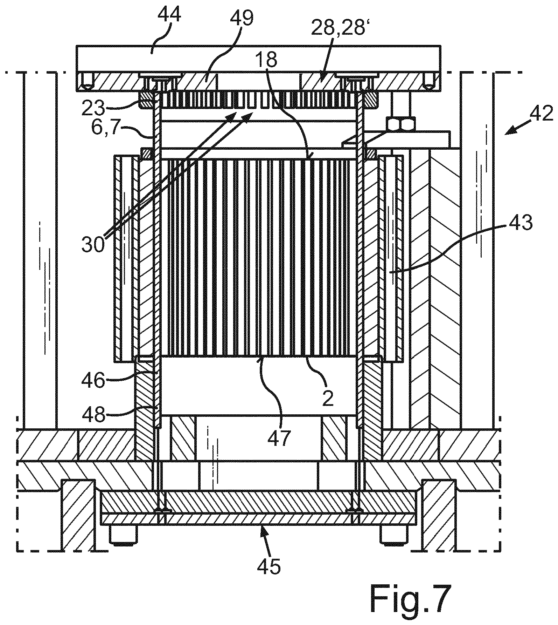

Fig. 7 veranschaulicht die vollständige Werkzeuganordnung 42 zum Herstellen des Stators 1. Zusätzlich zu den Werkzeugen 28, 28' ist eine Halteeinrichtung 43 für das Blechpaket 2 im unbestückten Zustand vorgesehen. Die Werkzeuge 28, 28' sind beispielsweise über ihren Flansch 41 mit einer Bewegungseinrichtung 44 verbunden, welche dazu ausgestaltet ist, die Werkzeuge 28, 28' relativ zur Halteeinrichtung 43 zu bewegen. Des Weiteren weist die Bewegungseinrichtung 44 eine Bestückungseinheit 45 auf, mittels welcher die Leiterelemente 6, 7 gruppenweise durch die axiale Nutöffnung 5 der Nuten 4 achsparallel zur Achse 9 in die Nuten 4 gesteckt werden und die Leiterenden 23 in den jeweils mit der Nut axial fluchtenden Aufnahmebereich 30 gesteckt werden. In Fig. 7 ist hierbei gezeigt, wie zu Beginn der Herstellung des Stators 1 Leiterelemente 6, 7 jeweils als gerade Stäbe 46 in die Nuten 4 eingesteckt worden sind. Die Stäbe 46 können hierbei die gleiche axiale Länge aufweisen. Wie in Fig. 1 gezeigt, kann aber auch vorgesehen sein, dass die Leiterstäbe, die Spulenanschlüsse 13 bereitstellen sollen, länger sind als die übrigen Leiterelemente. Des Weiteren ist zu beachten, dass die beschriebenen Verschaltungsbereiche 14 lediglich an einer Stirnseite 18 bereitzustellen sind. An einer gegenüberliegenden Stirnseite 47 können alle Leiterelemente gleichmäßig geformt werden, d.h. es ist dort nur ein Normalbereich und kein Verschaltungsbereich vorzusehen.

Die Stäbe 46 können entlang der axialen Richtung 3 in die Nuten 4 eingesteckt worden sein. Hierdurch ergibt sich eine Steckwicklung der elektrischen Spulen des Stators 1.

Fig. 7 zeigt dabei von einem Positionierungsprozess für die Leiterelemente 6, 7 einen ersten Prozessschritt, in welchem eine erste Gruppe 48 von Leiterelementen 6, 7 in das Blechpaket 2 eingesteckt und die Leiterenden 23 in den Werkzeugen 28, 28' positioniert werden. Die erste Gruppe 48 ist in Fig. 7 durch ein einzelnes Leiterelement 6, 7 repräsentiert. Zum Einstecken der Leiterenden sind die Werkzeuge 28, 28' in eine erste Drehstellung 49 bezüglich des Blechpakets 2 durch die Bewegungseinrichtung 4 gedreht worden. Hierbei kann das Blechpaket 2 und/oder das jeweilige Werkzeug 28, 28` gedreht werden.

Nach dem Einstecken der Leiterenden 23 wird in einem weiteren Prozessschritt eine relative Drehung der Werkzeuge 28, 28' bezüglich des Blechpakets 2 durch die Bewegungseinrichtung 4 durchgeführt. Hierdurch sind dann andere Nuten 4 fluchtend mit jeweiligen Aufnahmebereichen 30 angeordnet.

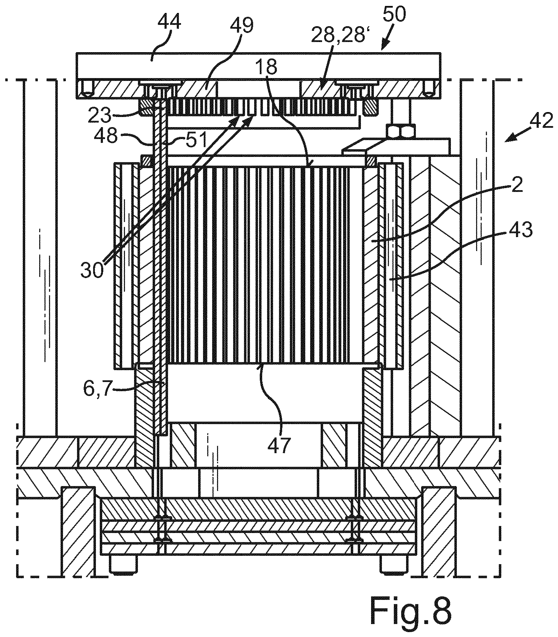

Die weitere Drehstellung ist in Fig. 8 als die Drehstellung 50 dargestellt. Nun kann eine zweite Gruppe 51 von Leiterelementen 6, 7 durch dafür vorgesehene Nuten 4 in das Blechpaket 2 eingesteckt und die Leiterenden 23 in die vorgesehenen Aufnahmebereiche 30 der Werkzeuge 28, 28' gesteckt werden. In Fig. 8 ist die zweite Gruppe 51 durch ein einzelnes Leiterelement 6, 7 repräsentiert.

Nicht dargestellt ist, wie eine weitere Gruppe, das heißt eine dritte Gruppe von Leiterelementen nach einer weiteren relativen Drehung der Werkzeuge 28, 28' bezüglich des Blechpakets 2 eingesteckt werden kann. Eine der Gruppen kann für die Leiterelemente des Normalbereichs vorgesehen sein, eine weitere Gruppe für die Spulenanschlüsse 13 und die dritte Gruppe für die Verbindungsenden 26.

Dann ergibt sich folgender Twistprozess. Die Leiterenden 23 der Leiterelemente 6, 7 jeder Lage oder Schicht 10, 11 sind axial in den Werkzeugbereichen 44, 45 in die dort angeordneten Taschen aufgenommen. Die Fixierung der Leiterenden 23 in den Taschen erfolgt während des Twistprozesses durch passive Klemmung. Diese wird gewährleistet durch entsprechend geringes Spiel zwischen den Leiterenden 23 und den Taschen. Die Werkzeugbereiche 44, 45 werden dann für den Twistprozess für Innen- und Außenschicht 10, 11 gegenläufig rotiert und verschränken dabei alle Leiterenden 23 gleichmäßig um einen identischen Drehwinkel entlang der Umfangsrichtung.

Durch die beschriebene Ausgestaltung der Taschen weisen die Leiterenden 23 bereits relativ zueinander fertig ausgerichtete Positionen vor dem eigentlichen Twistprozess auf.

Der Ablauf des Umformvorganges ist somit insgesamt wie folgt, wobei Bewegungen, die aufgrund von Verspannung und Rückfederung notwendig sind, hier nicht beschrieben worden sind.

Um zu erreichen, dass die aus dem Blechpaket 2 herausstehenden Pin-Enden oder Leiterteile 20 der Steckwicklung bereits relativ zueinander fertig ausgerichtet sind, bevor der eigentliche Twistprozess beginnt, müssen die Leiterteile 20 in mehreren Prozessschritten in den Aufnahmebereichen 30 des Werkzeugs 28, 28' aufgenommen werden. Diese erfolgt durch das schrittweise Durchschieben bestimmter Gruppen 48, 51 der Leiterelemente 6, 7 durch das Blechpaket 2 in die radial angeordneten Aufnahmebereiche 30 gefolgt vom schrittweisen Verdrehen oder Drehen des jeweiligen Werkzeugs 28, 28'. Ein möglicher Ablauf dieses Umformgangs ist wie folgt:
Prozessschritt 1: Durchschieben einer ersten Gruppe 28 von Leiterelementen 6, 7 durch das Blechpaket 2, sodass die Leiterenden 23 in Aufnahmebereiche 30 der Werkzeuge 28, 28' aufgenommen werden.

Prozessschritt 2: Radiales Verfahren oder Drehen des Werkzeugs 28, 28' um einen bestimmten Drehwinkel bezogen auf den vorgesehenen Drehwinkel für den Normalbereich 14'.

Prozessschritt 3: Durchschieben einer zweiten Gruppe 51 von Leiterelementen 6, 7 durch das Blechpaket 2, sodass die Leiterenden 23 in vorbestimmte Aufnahmebereiche 30 aufgenommen werden.

Prozessschritt 4: Radiales Verfahren oder Drehen der Werkzeuge 28, 28' um einen weiteren bestimmten Drehwinkel.

Prozessschritt 5: Durchschieben einer dritten Gruppe von Leiterelementen 6, 7 durch das Blechpaket 2, sodass die Leiterenden 23 in die noch freien Aufnahmebereiche 30 aufgenommen werden.

In einem Prozessschritt 6 wird dann der eigentliche Twistprozess durchgeführt, in welchem eine Twistdrehung 52 des Werkzeugs 28 in die Umfangsrichtung 37 und eine Twistdrehung in die Umfangsrichtung 38 mit dem Werkzeug 28` durchgeführt werden kann und hierbei die Werkzeuge 28, 28' mit dem Blechpaket 2 zusammengeführt oder zusammengedrückt werden. Hierdurch ergibt sich dann der Wickelkopf 25.

Abschließend können dann die Leiterenden 23 nach dem Abnehmen oder Entfernen der Werkzeuge 28, 28' verlötet oder verschweißt werden. Hierzu kann beispielsweise ein Laserschweißverfahren vorgesehen sein.

Insgesamt zeigt das Beispiel, wie durch die Erfindung eine Werkzeugvariante für das selektive Twisten beim Verschränken von Pin-Enden in der Herstellung von Motorwicklungen bereitgestellt werden kann.

## Patentansprüche

1. Verfahren zum Herstellen eines Stators (1), wobei
in Nuten (4) eines Blechpakets (2) für eine radial außenliegende Schicht (10) und eine radial innenliegende Schicht (11) einer Zweischichtwicklung (12) jeweils ein elektrisches Leiterelement (6, 7) pro Schicht (10, 11) angeordnet wird,
**dadurch gekennzeichnet, dass**
an einer Stirnseite (18) des Blechpakets (2) für eine oder beide der Schichten (10, 11) jeweils ein Werkzeug (28, 28') mit in einem Ring (29) angeordneten Aufnahmebereichen (30) bereitgestellt wird, wobei das Werkzeug (28, 28') für jede Schicht (10, 11) jeweils einteilig ausgestaltet ist, und
eine relative Anordnung der Aufnahmebereiche (30) entlang einer Umfangsrichtung (32) des Ringes (29) einer relativen Endstellung entspricht, die für Leiterenden (23) der Leiterelemente (6) der Schicht (10) zur Verschaltung eines Teils der Leiterenden (23) mit korrespondierenden Leiterenden (23) der Leiterelemente (7) der anderen Schicht (11, 10) vorgesehen ist, und
in einem Positionierprozess das Werkzeug (28, 28') in eine erste Drehstellung (49) bewegt wird und jedes Leiterende (23) einer ersten Gruppe (48) der Leiterelemente (6, 7) der Schicht (10, 11) jeweils in einen der Aufnahmebereiche (30) gesteckt wird, dann das Werkzeug (28, 28') in zumindest eine weitere Drehstellung (50) gedreht wird und jeweils jedes Leiterende (23) einer
weiteren Gruppe (51) der Leiterelemente (6, 7) der Schicht (10, 11) jeweils in einen der Aufnahmebereiche (30) gesteckt wird, bis die Leiterenden (23) aller Leiterelemente (6, 7) der Schicht (10, 11) die relative Endstellung zueinander aufweisen.

2. Verfahren nach Anspruch 1, wobei insgesamt drei Gruppen (48, 51) vorgesehen sind, von denen für alle vorgesehenen elektrischen Spulen (15) des Stators (1) eine der Gruppen (48, 51) die
Leiterenden (23) eines Normalbereichs (14'), eine der Gruppen (38, 51) die Leiterenden (26) zum Verschalten von Windungen (16) der Spulen (15) und eine der Gruppen (48, 51) die Leiterenden (23) für Spulenanschlüsse (13) der Spulen (15) umfasst.

3. Verfahren nach einem der vorhergehenden Ansprüche, wobei die Leiterelemente (6, 7) zum Anordnen in den Nuten (4) und Einstecken der Leiterenden (23) in die Aufnahmebereiche (30) als gerade Stäbe (46) durch jeweils eine der Nuten (4) gesteckt werden.

4. Verfahren nach Anspruch 3, wobei die Leiterelemente (6, 7) hierbei in die Nuten (4) geschossen werden.

5. Werkzeuganordnung (42) zum Herstellen eines Stators (1) für eine elektrische Maschine, aufweisend:
- ein jeweiliges Werkzeug (28, 28') für zumindest eine Schicht (10, 11) einer Zweischichtwicklung (12), mit jeweiligen in einem Ring (29) angeordneten Aufnahmebereichen (30) zum Einstecken eines Leiterendes (23) eines Leiterelements (6, 7), wobei eine relative Anordnung der Aufnahmebereiche (30) entlang einer Umfangsrichtung (32) des Ringes (29) einer relativen Endstellung entspricht, die für Leiterenden (23) der Leiterelemente (6) der Schicht (10) zur Verschaltung eines Teils der Leiterenden (23) mit korrespondierenden Leiterenden (23) der Leiterelemente (7) der anderen Schicht (11) vorgesehen ist, und das Werkzeug (28, 28') für jede Schicht (10, 11) jeweils einteilig ausgestaltet ist,
- eine Halteeinrichtung (43) zum Halten eines Blechpakets (2) derart, dass eine Stirnseite (18) des Blechpakets (2) dem zumindest einen Werkzeug (28, 28') zugewandt ist,
- eine Bewegungseinrichtung (44), die dazu ausgelegt ist, bei in der Halteeinrichtung (43) angeordnetem Blechpaket (2) in einem Positionierprozess pro Schicht (10, 11) jeweils Leiterenden (23) von Leiterelementen (6, 7) für die Schicht (10, 11) in jeweils einen der Aufnahmebereiche (30) anzuordnen und hierzu das Werkzeug (28, 28') in eine erste Drehstellung (49) zu bewegen und jedes Leiterende (23) einer ersten Gruppe (48) der Leiterelemente (6, 7) der Schicht (10, 11) jeweils in einen der Aufnahmebereiche (30) zu stecken, dann das Werkzeug (28, 28') in zumindest eine weitere Drehstellung (50) zu drehen und jeweils jedes Leiterende (23) einer weiteren Gruppe (51) der Leiterelemente (6, 7) der Schicht (10, 11) jeweils in einen der Aufnahmebereiche (30) zu stecken, bis die Leiterenden (23) aller Leiterelemente (6, 7) der Schicht (10, 11) in jeweils einen Aufnahmebereich (30) gesteckt sind und hierdurch die relative Endstellung zueinander aufweisen.

6. Werkzeuganordnung (42) nach Anspruch 5, wobei die Bewegungseinrichtung (44) dazu ausgelegt ist, nach dem Positionierprozess in einem Twistprozess das Werkzeug (28. 28') jeder Schicht (10, 11) einerseits und das Blechpaket (2) andererseits zusammenzuführen und währenddessen das Werkzeug (28, 28') relativ zum Blechpaket (2) zu drehen, so dass die Leiterelemente (6, 7) gleichmäßig bezüglich der Stirnseite (18) um denselben Schrägungswinkel (22) geknickt werden.

## Claims

1. Method for producing a stator (1), wherein, for a radially outer layer (10) and a radially inner layer (11) of a two-layer winding (12), an electrical conductor element (6, 7) for each layer (10, 11) is respectively arranged in slots (4) of a laminated core (2),
**characterized in that**,
for one or both of the layers (10, 11), a tool (28, 28') with receiving regions (30) arranged in a ring (29) is respectively provided on an end face (18) of the laminated core (2), wherein the tool (28, 28') is respectively of a one-part design for each layer (10, 11), and
a relative arrangement of the receiving regions (30) along a circumferential direction (32) of the ring (29) corresponds to a relative end position that is intended for conductor ends (23) of the conductor elements (6) of the layer (10) for interconnection of some of the conductor ends (23) with corresponding conductor ends (23) of the conductor elements (7) of the other layer (11, 10), and
in a positioning process the tool (28, 28') is moved into a first turning position (49) and each conductor end (23) of a first group (48) of the conductor elements (6, 7) of the layer (10, 11) is respectively inserted into one of the receiving regions (30), then the tool (28, 28') is turned into at least one further turning position (50) and each conductor end (23) of a further group (51) of the conductor elements (6, 7) of the layer (10, 11) is in each case respectively inserted into one of the receiving regions (30) until the conductor ends (23) of all the conductor elements (6, 7) of the layer (10, 11) are in the relative end position in relation to one another.

2. Method according to Claim 1, wherein altogether three groups (48, 51) are provided, of which one of the groups (48, 51) comprises the conductor ends (23) of a normal region (14'), one of the groups (38, 51) comprises the conductor ends (26) for interconnecting turns (16) of the coils (15) and one of the groups (48, 51) comprises the conductor ends (23) for coil terminals (13) of the coils (15), for all of the electrical coils (15) of the stator (1) that are provided.

3. Method according to one of the preceding claims, wherein, for arranging them in the slots (4) and for inserting the conductor ends (23) into the receiving regions (30), the conductor elements (6, 7) are inserted as straight bars (46) through one of the slots (4) in each case.

4. Method according to Claim 3, wherein here the conductor elements (6, 7) are fired into the slots (4).

5. Tool arrangement (42) for producing a stator (1) for an electrical machine, having:
- a respective tool (28, 28') for at least one layer (10, 11) of a two-layer winding (12), with respective receiving regions (30) arranged in a ring (29) for inserting a conductor end (23) of a conductor element (6, 7), wherein a relative arrangement of the receiving regions (30) along a circumferential direction (32) of the ring (29) corresponds to a relative end position that is intended for conductor ends (23) of the conductor elements (6) of the layer (10) for interconnection of some of the conductor ends (23) with corresponding conductor ends (23) of the conductor elements (7) of the other layer (11), and the tool (28, 28') is respectively of a one-part design for each layer (10, 11),
- a holding device (43) for holding a laminated core (2) in such a way that an end face (18) of the laminated core (2) is facing the at least one tool (28, 28'),
- a movement device (44), designed for the purpose that, with a laminated core (2) arranged in the holding device (43), for each layer (10, 11) conductor ends (23) of conductor elements (6, 7) for the layer (10, 11) are respectively to be arranged in one of the receiving regions (30) in each case in a positioning process and for this purpose the tool (28, 28') is to be moved into a first turning position (49) and each conductor end (23) of a first group (48) of the conductor elements (6, 7) of the layer (10, 11) is to be respectively inserted into one of the receiving regions (30), then the tool (28, 28') is to be turned into at least one further turning position (50) and each conductor end (23) of a further group (51) of the conductor elements (6, 7) of the layer (10, 11) in each case is to be respectively inserted into one of the receiving regions (30), until the conductor ends (23) of all the conductor elements (6, 7) of the layer (10, 11) have been respectively inserted into a receiving region (30) and, as a result, are in the relative end position in relation to one another.

6. Tool arrangement (42) according to Claim 5, wherein the movement device (44) is designed for the purpose that, after the positioning process, the tool (28, 28') of each layer (10, 11) on the one hand and the laminated core (2) on the other hand are to be brought together in a twisting process and, during that, the tool (28, 28') is to be turned in relation to the laminated core (2), so that the conductor elements (6, 7) are uniformly bent by the same skewing angle (22) with respect to the end face (18).

## Revendications

1. Procédé de fabrication d'un stator (1), un élément électriquement conducteur (6, 7) étant disposé dans des rainures (4) d'un noyau feuilleté (2) pour chaque couche (10, 11), à savoir une couche radialement extérieure (10) et une couche radialement intérieure (11), d'un enroulement à deux couches (12),
**caractérisé en ce que**
un outil (28, 28') pourvu de zones de réception (30) disposées suivant un anneau (29) est prévu pour une couche ou les deux couches (10, 11) sur un côté frontal (18) du noyau feuilleté (2), l'outil (28, 28') étant conçu d'une seule pièce pour chaque couche (10, 11), et une disposition relative des zones de réception (30) le long d'une direction circonférentielle (32) de l'anneau (29) correspond à une position finale relative, qui est prévue pour les extrémités conductrices (23) des éléments conducteurs (6) de la couche (10), afin de connecter une partie des extrémités conductrices (23) à des extrémités conductrices correspondantes (23) des éléments conducteurs (7) de l'autre couche (11, 10), et l'outil (28, 28') est déplacé, lors d'un processus de positionnement, dans une première position en rotation (49) et chaque extrémité conductrice (23) d'un premier groupe (48) d'éléments conducteurs (6, 7) de la couche (10, 11) est placé dans l'une des zones de réception (30), puis l'outil (28, 28') est tourné dans au moins une autre position en rotation (50) et chaque extrémité conductrice (23) d'un autre groupe (51) d'éléments conducteurs (6, 7) de la couche (10, 11) est placée dans l'une des zones de réception (30) jusqu'à ce que les extrémités conductrices (23) de tous les éléments conducteurs (6, 7) de la couche (10, 11) aient la position finale relative les unes par rapport aux autres.

2. Procédé selon la revendication 1, au total trois groupes (48, 51) étant prévus dont, pour toutes les bobines électriques (15) du stator (1), l'un des groupes (48, 51) comprend les extrémités conductrices (23) d'une zone normale (14'), l'un des groupes (38, 51) comprend les extrémités conductrices (26) destinées à la connexion des enroulements (16) des bobines (15) et l'un des groupes (48, 51) comprend les extrémités conductrices (23) destinées aux bornes (13) des bobines (15) .

3. Procédé selon l'une des revendications précédentes, les éléments conducteurs (6, 7) étant placés respectivement sous la forme de tiges droites (46) à travers l'une des rainures (4) afin de disposer les extrémités conductrices (23) dans les rainures (4) et les insérer dans les zones de réception (30).

4. Procédé selon la revendication 3, les éléments conducteurs (6, 7) étant alors tirés jusque dans les rainures (4).

5. Ensemble d'outils (42) destiné à la fabrication d'un stator (1) d'une machine électrique, ledit ensemble d'outil comportant :
- un outil respectif (28, 28') destiné à au moins une couche (10, 11) d'un enroulement à deux couches (12) et comprenant des zones de réception respectives (30) disposées suivant un anneau (29) afin d'insérer une extrémité conductrice (23) d'un élément conducteur (6, 7), une disposition relative des zones de réception (30) le long d'une direction circonférentielle (32) de l'anneau (29) correspondant à une position finale relative qui est prévue pour les extrémités conductrices (23) des éléments conducteurs (6) de la couche (10) afin de connecter une partie des extrémités conductrices (23) aux extrémités conductrices correspondantes (23) des éléments conducteurs (7) de l'autre couche (11), et l'outil (28, 28') étant conçu d'une seule pièce pour chaque couche (10, 11),
- un dispositif de retenue (43) destiné à maintenir un noyau stratifié (2) de manière à ce qu'un côté frontal (18) du noyau stratifié (2) soit dirigé vers au moins un outil (28, 28'),
- un dispositif de déplacement (44) qui est conçu pour disposer les extrémités conductrices (23) des éléments conducteurs (6, 7) pour la couche (10, 11) dans l'une des zones de réception (30) lors d'un processus de positionnement pour chaque couche (10, 11) lorsque le noyau stratifié (2) est disposé dans le dispositif de retenue (43) et pour déplacer pour cela l'outil (28, 28') jusque dans une première position en rotation (49) et placer chaque extrémité conductrice (23) d'un premier groupe (48) d'éléments conducteurs (6, 7) de la couche (10, 11) respectivement dans l'une des zones de réception (30), puis faire tourner l'outil (28, 28') dans au moins une autre position en rotation (50) et placer chaque extrémité conductrice (23) d'un autre groupe (51) d'éléments conducteurs (6, 7) de la couche (10, 11) respectivement dans l'une des zones de réception (30) jusqu'à ce que les extrémités conductrices (23) de tous les éléments conducteurs (6, 7) de la couche (10, 11) soient placées respectivement dans une zone de réception (30) et aient ainsi une position finale relative les unes par rapport aux autres.

6. Ensemble d'outils (42) selon la revendication 5, le dispositif de déplacement (44) étant conçu pour réunir l'outil (28, 28') de chaque couche (10, 11) d'une part et le noyau stratifié (2) d'autre part dans un processus de torsion après le processus de positionnement et, pendant ce temps-là, faire tourner l'outil (28, 28') par rapport au noyau stratifié (2) de sorte que les éléments conducteurs (6, 7) soient courbés uniformément par rapport au côté frontal (18) du même angle d'inclinaison (22).
